# DEMANDE DE BREVET EUROPEEN

(11) **EP 3 009 405 A1**
(43) Date de publication de la demande: **20.04.2016**
(21) Numéro de dépôt: 15188206.5
(22) Date de dépôt: 02.10.2015
(51) Int. Cl.: C02F 1/28, C02F 1/52, B01J 20/20, C01B 3/08

(54) **PROCÉDÉ DE TRAITEMENT D'EAU PAR ADSORPTION SUR CHARBON ACTIF ET CLARIFICATION, ET INSTALLATION CORRESPONDANTE**

(30) Priorité: 13.10.2014 FR 1459803
(71) Demandeur: Veolia Water Solutions & Technologies Support, 94417 Saint-Maurice Cedex (FR)
(72) Inventeur: SAUVIGNET, Philippe, 35460 Saint-Etienne en Coglès (FR); GAID, Abdelkader, 75014 Paris (FR)
(74) Mandataire: Vidon Brevets & Stratégie

(57) **Abrégé**

Procédé de traitement d'eau en vue d'en abattre la teneur en matières organiques et en polluants, ledit procédé comprenant :
une première étape (1) de mise en contact d'une eau à traiter avec un matériau adsorbant granulaire mise en oeuvre de façon à observer un temps de contact de ladite eau avec ledit matériau adsorbant compris entre 5 et 20 mn ;
suivie d'une deuxième étape (6) de clarification du mélange d'eau et de matériau adsorbant granulaire provenant de ladite première étape conduisant d'une part à l'obtention d'une eau clarifiée et d'autre part à celle de matériau adsorbant granulaire usité ;
une recirculation (11) continue ou intermittente dudit matériau adsorbant granulaire usité vers ladite première étape ;
une purge (12) continue ou intermittente d'une partie du matériau adsorbant granulaire usité et un apport continu ou intermittent de matériau adsorbant granulaire neuf en quantité suffisante pour compenser ladite partie de matériau adorbant granulaire purgé ;
et ledit matériau adsorbant granulaire étant constitué d'agglomérats de particules de charbon actif, lesdits agglomérats présentant une taille moyenne comprise entre 20 µm et 1000 µm, et un indice d'iode supérieur à 1000 mg/g.

## Description

### Domaine technique de l'invention

L'invention concerne le domaine du traitement de l'eau.

Plus précisément, l'invention concerne les procédés de traitement de l'eau mettant en oeuvre au moins une étape de traitement au cours de laquelle l'eau est mise en contact avec un matériau pulvérulent adsorbant en vue d'en abattre la teneur en matières organiques et en polluants (pesticides, micro-polluants, perturbateurs endocriniens, résidus industriels, résidus de médicaments ...).

### Art antérieur

De tels matériaux pulvérulents adsorbants peuvent être mis en oeuvre dans le cadre de tels procédés et installations selon différentes configurations.

Selon un premier type de configuration, le matériau adsorbant est prévu sous forme d'un lit fixe retenu au sein d'une installation formant filtre par des moyens appropriés. L'eau à traiter transite par ce lit fixe sur laquelle l'eau est filtrée et la matière organique est adsorbée. Pour la réalisation de tels lits filtrants, on utilise fréquemment du charbon actif en grains (CAG). Le CAG présente une granulométrie moyenne comprise entre 1 et 3 millimètres.

Un tel lit de CAG présente des propriétés de filtration et d'adsorption.

Le CAG présente aussi l'avantage d'être régénérable, en ce sens qu'un traitement physique et/ou physico-chimique peut lui être appliqué de façon à restaurer au moins partiellement ses capacités d'adsorption. Pour ce faire, le procédé le plus couramment mis en oeuvre consiste en une réactivation thermique, pratiquée dans un four à l'intérieur duquel règne une température élevée (aux alentours de 800°C) permettant aux molécules adsorbées d'être détruites par la chaleur. De la vapeur d'eau peut être utilisée pour parfaire cette régénération, le charbon actif en grains pouvant alors retrouver une structure très proche de sa structure initiale libre de tout polluant. La régénération du charbon actif en grains peut aussi être effectuée par lavage acide ou basique ce qui, toutefois, ne permet généralement pas au CAG de retrouver toutes ses performances initiales.

L'inconvénient principal de l'utilisation du charbon actif en grains dans le cadre des procédés de traitement d'eau réside dans le fait que ce matériau est très rapidement saturé par les matières qui s'y sont adsorbées.

Cette saturation rapide contraint l'utilisateur à le renouveler fréquemment. Les coûts d'exploitation s'en trouvent accrus.

De plus, la saturation rapide du CAG implique que les performances des traitements d'eau le mettant en oeuvre ne sont ni stables dans le temps ni pérennes, rendant difficile, ou même proscrivant, leur utilisation pour certaines applications.

Il a par ailleurs été observé que, lorsque le charbon actif en grains était saturé, un relargage des substances organiques adsorbées pouvait se produire. Un tel relargage peut avoir des résultats négatifs sur la qualité finale de l'eau traitée. Pour éviter cette conséquence, le renouvellement du CAG doit intervenir rapidement.

En pratique, ce renouvellement ne peut se faire sans stopper le fonctionnement des installations. Il s'ensuit tous les inconvénients liés à une telle interruption et notamment une perte de productivité des installations. En pratique aussi, la mise en place ponctuelle d'une grande quantité de CAG neuf induit systématiquement une période de surperformance du système et par conséquent la nécessité d'ajuster d'éventuels traitements en aval, tels qu'une désinfection par ajout de réactif oxydant, par exemple de chlore, dont la demande se trouve ainsi modifiée.

Selon un deuxième type de configuration, le matériau adsorbant granulaire est ajouté à l'eau à traiter dans un réacteur selon un temps de contact suffisant pour permettre l'adsorption de la matière organique. Ce matériau, chargé des matières qui s'y sont adsorbées, doit ensuite être séparé de l'eau traitée par clarification. C'est à ce deuxième type de configuration que se rapporte plus particulièrement l'invention.

Pour ce type de configuration, on utilise fréquemment du charbon actif en poudre (CAP) à titre de matériau adsorbant. Par charbon actif en poudre, on entend un matériau carboné inerte, doté d'une porosité intrinsèque très développée qui lui confère une surface spécifique élevée qui lui donne la propriété d'adsorber des quantités importantes de molécules organiques et de catalyser des réactions. En pratique, on peut évaluer la capacité d'adsorption d'un matériau adsorbant pulvérulent par la mesure de son indice d'iode. La capacité d'adsorption par mesure de l'indice d'iode indique la quantité d'iode, exprimée en milligramme, adsorbée par gramme de charbon actif en poudre. Pour un CAP neuf, l'indice d'iode est compris généralement entre 800 et 1 000 mg/g selon les fabricants. Cette mesure de l'indice d'iode peut notamment être effectuée selon la norme internationale ASTM n° D4607.

Les CAP utilisés dans le cadre des procédés de traitement d'eau présentent une granulométrie moyenne comprise entre 10 µm et 50 µm et une surface spécifique correspondant à un indice d'iode compris entre 800 et 1000 mg/g de CAP (indice mesuré selon la norme indiquée ci-dessus).

Selon ce deuxième type de configuration, l'eau est mise en contact avec le matériau pulvérulent adsorbant en présence de réactifs chimiques coagulant et/ou floculant pendant un temps de contact suffisant pour permettre à l'essentiel de la matière organique d'être adsorbée sur le matériau en question et de former avec celui-ci des flocs plus facilement décantables. Ce mélange de flocs et d'eau subit ensuite une étape de clarification visant à obtenir de l'eau débarrassée de l'essentiel de sa matière organique et des boues constituées de flocs amalgamés. Cette étape de clarification est généralement mise en oeuvre par une décantation ou par séparation membranaire.

Compte tenu du coût relativement élevé des matériaux adsorbants, et notamment du charbon actif en poudre, il est courant de prévoir le recyclage de ceux-ci au cours de ce type de procédé. A cette fin, il est connu de traiter les boues récupérées à l'issue de l'étape de clarification indiquée ci-dessus et contenant du matériau adsorbant, de façon à en éliminer l'essentiel de la phase aqueuse. Cette étape est généralement mise en oeuvre par hydrocyclonage. On obtient à l'issue de cette étape, en sousverse de l'hydrocyclone, une phase contenant du matériau pulvérulent adsorbant qui peut être réintroduite dans le procédé de traitement d'eau. En pratique, cette phase contient une proportion élevée de matériau pulvérulent et encore de l'eau et se présente sous la forme d'une boue relativement fluide, l'essentiel de la phase aqueuse des boues provenant de l'étape de séparation indiquée ci-dessus ayant toutefois été éliminée en surverse de l'hydrocyclone.

Un exemple d'un tel procédé de l'art antérieur est décrit dans la demande de brevet française FR-A-2868064.

Selon un tel art antérieur, le matériau pulvérulent adsorbant n'est pas régénéré lorsqu'il est recyclé. Notamment, le matériau adsorbant usité n'est pas débarrassé par l'étape d'hydrocyclonage de l'essentiel de la matière organique adsorbée sur celui-ci mais seulement d'une partie de celle-ci. Le matériau organique est donc recyclé mais sa capacité d'adsorption est grandement réduite.

Il est donc nécessaire de remplacer régulièrement une partie du CAP mis en oeuvre au sein du réacteur par du CAP neuf. Des quantités de CAP neuf doivent donc parallèlement être injectées régulièrement dans le réacteur pour compenser la perte d'adsorption du CAP usité.

Bien que ce type de procédé autorise le remplacement d'une partie du CAP usité par du CAP neuf sans devoir mettre à l'arrêt les installations qui le mettent en oeuvre, il présente par ailleurs d'autres inconvénients.

Ainsi, le CAP issu des purges du système ne peut pas être régénéré en ce sens qu'on ne connaît pas de traitement efficace économiquement permettant de redonner au CAP son pouvoir adsorbant d'origine ou un pouvoir adsorbant proche de celui-ci. Il en résulte la production de boues de CAP qui doivent être évacuées hors de l'usine. Le traitement de ces boues n'est pas sans inconvénient. Notamment, les boues doivent être déshydratées avant d'être transportées, ce qui augmente les coûts associés à leur mise en décharge ou à leur incinération où à leur épandage agricole.

Le CAP étant un matériau cher, son utilisation dans le cadre du traitement de l'eau se heurte donc à des impératifs économiques, les techniques le mettant en oeuvre présentant l'inconvénient d'impliquer, de ce fait, des coûts de fonctionnement élevés.

De plus, le traitement de l'eau par le CAP implique en pratique l'addition de coagulants, tel que du FeCl₃, et/ou de floculants, tels que des polymères, permettant la formation de flocs suffisamment denses pour favoriser la décantation, et permettant aussi d'éviter les fuites de CAP et de ne pas dégrader les traitements d'affinage prévus en aval, tels qu'une filtration. L'utilisation de ces produits chimiques, notamment celle de polymères, peut conduire à une saturation accélérée du CAP ce qui oblige l'utilisateur à le renouveler plus fréquemment. Surtout, l'utilisation de ces réactifs conduit à l'obtention de volumes de boues augmentés devant être traités dans des filières parallèles. En pratique ces boues doivent être épaissies, déshydratées et évacuées hors du site de production. Les coûts d'exploitation de tels procédés s'en trouvent donc également augmentés. Ces boues de CAP ne peuvent en tout état de cause pas être traitées de façon à permettre l'obtention de CAP régénéré.

Par ailleurs, il n'est pas possible d'utiliser des vitesses élevées pour faire transiter les eaux à traiter dans les réacteurs le contenant de façon à limiter les pertes en CAP. De ce fait, les réacteurs doivent présenter des volumes importants ce qui augmente également les coûts de tels traitements.

On notera aussi que lorsque l'étape de séparation est effectuée grâce à des membranes d'ultrafiltration, on observe des pertes en eaux élevées. En effet les fréquences de rétrolavage des membranes doivent être élevées afin de limiter la formation d'un gâteau de CAP sur leurs surfaces engendrant des pertes de capacité de filtration. Il en résulte des volumes d'eaux sales et donc des pertes en eaux significativement augmentées.

### Objectifs de l'invention

L'objectif de la présente invention est de proposer un procédé de traitement d'eau en vue d'en éliminer les matières organiques et les polluants dans lequel l'eau est mise en contact dans un réacteur avec un matériau granulaire adsorbant ne nécessitant pas l'addition de réactifs chimiques du type coagulant ou polymère.

Corolairement, un objectif de la présente invention est de proposer un tel procédé qui ne conduise pas à la formation de boues et qui permet donc de s'affranchir de toute étape de traitement de celle-ci telle qu'un épaississement, une déshydratation, ou une incinération.

Un autre objectif de la présente invention et de décrire un tel procédé, selon lequel le matériau adsorbant en question peut être recyclé sans traitement particulier tel qu'un hydrocyclonage.

Encore un objectif de la présente invention et de divulguer un tel procédé selon lequel le matériau adsorbant peut être peu à peu renouvelé sans avoir à interrompre le traitement.

Un objectif de la présente invention est aussi de divulguer un tel procédé qui permette de maintenir un niveau de traitement de l'eau essentiellement constant dans le temps.

Egalement un objectif de la présente invention est de proposer un tel procédé qui, dans au moins un de ses modes de réalisation, conduit à un matériau adsorbant usité qui peut être directement régénéré, c'est-à-dire dont la capacité d'adsorption vis-à-vis de la matière organique peut être facilement restaurée.

Ainsi, un objectif de l'invention est de décrire un tel procédé qui, dans au moins un de ses modes de réalisation, permet de restaurer 50 % de la capacité d'adsorption du matériau adsorbant, c'est-à-dire permettant d'obtenir un matériau adsorbant au moins partiellement régénéré dont la capacité d'adsorption correspond à au moins 50 % de celle du même matériau adsorbant neuf.

Un autre objectif de la présente invention est de décrire un tel procédé induisant des coûts de traitement plus faibles que ceux des procédés de l'art antérieur, à niveaux de traitement sensiblement égaux.

Encore un objectif de la présente invention est de décrire un tel procédé qui, dans au moins certains modes de réalisation, peut être mis en oeuvre dans des installations présentant un volume réduit par rapport à celles mises en oeuvre dans le cadre des procédés de l'art antérieur, à niveaux de traitement sensiblement égaux.

Un autre objectif de l'invention est de proposer une telle installation.

### Exposé de l'invention

Ces différents objectifs, ainsi que d'autres qui apparaîtront par la suite, sont atteints grâce à l'invention qui concerne un procédé de traitement d'eau en vue d'en abattre la teneur en matières organiques et en polluants, ledit procédé comprenant :
une première étape de mise en contact d'une eau à traiter avec un matériau adsorbant granulaire mise en oeuvre de façon à observer un temps de contact de ladite eau avec ledit matériau adsorbant compris entre 5 mn et 20 min ;
suivie d'une deuxième étape de clarification du mélange d'eau et de matériau adsorbant provenant de ladite première étape conduisant d'une part à l'obtention d'une eau clarifiée et d'autre part à celle de matériau adsorbant usité ;
une recirculation continue ou intermittente dudit matériau granulaire adsorbant usité vers ladite première étape ;
une purge continue ou intermittente d'une partie du matériau granulaire adsorbant usité et un apport continu ou intermittent de matériau granulaire adsorbant neuf en quantité suffisante pour compenser ladite partie de matériau granulaire adsorbant purgé ;
ledit matériau granulaire adsorbant étant constitué d'agglomérats de particules de charbon actif, lesdits agglomérats présentant une taille moyenne comprise entre 20 µm et 1000 µm, et un indice d'iode supérieur à 1000 mg/g.

L'indice d'iode est ici entendu comme mesuré selon la norme internationale ASTM n° D4607 citée ci-dessus.

Un tel matériau, disponible dans le commerce, n'est donc pas un CAP au sens où on l'entend dans le domaine du traitement de l'eau. Il présente en effet une surface spécifique plus élevée que le CAP. Il ne constitue également pas un CAG au sens où on l'entend dans le domaine du traitement de l'eau. Il présente en effet une granulométrie plus faible.

Grâce à l'utilisation d'un tel matériau adsorbant spécifique qui, à la connaissance de la Demanderesse, n'avait jusqu'ici jamais été utilisé ou proposé dans le cadre du traitement de l'eau, le procédé selon l'invention peut avantageusement être mis en oeuvre en l'absence de tout ajout de produit chimique. Ce matériau spécifique permet ainsi au procédé de ne pas conduire à la formation de boues. Les coûts de mise en oeuvre du procédé selon l'invention sont donc réduits par rapport aux coûts suscités par les procédés de l'art antérieur qui impliquent la nécessité de traiter les boues issues produites.

Le matériau adsorbant usité issu de l'étape de clarification n'a par ailleurs pas besoin de subir un traitement particulier tel qu'un hydrocyclonage pour être recyclé en tête du procédé puisqu'il n'est pas intégré dans des boues résultant de l'ajout de coagulants et/ou de floculants. Certes, une partie des pores de ce matériau usité sont occupées par de la matière organique ou des polluants, mais une autre partie de ces pores restent libres. Le recyclage permet ainsi d'épuiser peu à peu les capacités d'adsorption du matériau, le niveau de traitement étant en tout état de cause maintenu par la purge d'une partie de celui-ci et son remplacement par du matériau neuf.

Enfin, ce matériau adsorbant présente la particularité de pouvoir être régénéré par voir thermique en l'absence de tout traitement, à part un simple égouttage préalable.

Le temps de contact de ladite eau avec ledit matériau adsorbant au cours de la première étape, compris entre 5 min et 20 min, a été déterminé pour permettre une adsorption efficace de la matière organique et des polluants.

On notera que l'étape de clarification pourra être mise en oeuvre soit par décantation soit par séparation membranaire. Le matériau spécifique en question n'est en effet pas susceptible d'endommager de telles membranes. Préférentiellement, la clarification sera effectuée par décantation.

Egalement préférentiellement, ledit matériau adsorbant granulaire est constitué d'agglomérats de particules de charbon actif, lesdits agglomérats présentant une taille moyenne comprise entre 200 µm et 700 µm.

Avantageusement, ladite purge continue ou intermittente d'une partie du matériau adsorbant usité et l'apport continu ou intermittent de matériau granulaire neuf sont mis en oeuvre de façon à maintenir une concentration dudit matériau adsorbant lors de ladite première étape comprise entre 2 mg/l et 50 mg/l.

Selon une variante de l'invention, le procédé comprend une étape supplémentaire d'affinage, comprise dans le groupe constitué par une désinfection et une filtration sur membranes ou sur lit de particules, de ladite eau clarifiée provenant de ladite deuxième étape.

Préférentiellement, ladite seconde étape est effectuée à une vitesse de décantation apparente comprise entre 10 m/h et 20 m/h.

Selon une variante avantageuse, le procédé comprend l'égouttage du matériau adsorbant usité purgé puis la régénération directe par voie thermique dudit matériau ainsi égoutté.

L'invention concerne également une installation pour la mise en oeuvre du procédé, ladite installation comprenant :
un réacteur contenant un matériau granulaire adsorbant constitué d'agglomérats de particules de charbon actif, lesdits agglomérats présentant une taille moyenne comprise entre 20 µm et 1000 µm, et un indice d'iode supérieur à 1000 mg/g, ledit réacteur étant pourvu de moyens d'amenée d'eau et d'une canalisation d'évacuation d'un mélange d'eau et de matériau granulaire adsorbant;
un décanteur présentant dans sa partie supérieure une entrée de fluide reliée à ladite canalisation d'évacuation dudit réacteur et une sortie d'eau clarifiée et présentant une partie inférieure essentiellement conique dotée d'une sortie de matériau granulaire décanté;
une canalisation de recyclage reliant ladite partie inférieure du décanteur audit réacteur;
des moyens de purge d'une partie du matériau granulaire décanté.

Préférentiellement, ledit décanteur est pourvue d'une pluralité de lamelles.

Selon une variante particulièrement intéressante de l'invention, lesdites lamelles sont coniques et organisées par empilement les unes dans les autres en ménageant des chemins de transit de fluide entre lamelles adjacentes.

Selon une variante, le décanteur présente un corps essentiellement cylindrique, ladite entrée de fluide étant prévue pour distribuer celui-ci tangentiellement dans ledit corps.

Egalement selon une variante, ledit réacteur présente un corps essentiellement cylindrique et est pourvue de moyens d'agitation.

Selon une autre variante, ledit réacteur présente un corps essentiellement en forme d'entonnoir délimitant une chambre présentant deux compartiments délimités par une paroi, l'un pourvu dans sa partie inférieure desdits moyens d'amenée d'eau et l'autre pourvu dans sa partie inférieure de ladite canalisation d'évacuation du mélange d'eau et de matériau granulaire adsorbant et reliée dans sa partie supérieure à ladite canalisation de recyclage. Une telle forme présente l'avantage d'être compacte et d'impliquer des économies d'énergie, aucun moyen d'agitation ne lui étant nécessaire pour permettre le mélange de matériau adsorbant et 'eau.

### Liste des figures

L'invention, ainsi que les différents avantages qu'elle présente seront plus facilement compris grâce à la description qui va suivre d'un exemple non limitatif de réalisation de celle-ci donné en référence aux dessins dans lesquels :
- la figure 1 représente de façon schématique un mode de réalisation d'une installation pour la mise en oeuvre du procédé selon l'invention ;
- la figure 2 représente le réacteur contenant le matériau adsorbant de l'installation représentée à la figure 1 ;
- la figure 3 représente une alternative à un tel réacteur.

### Exemple de réalisation

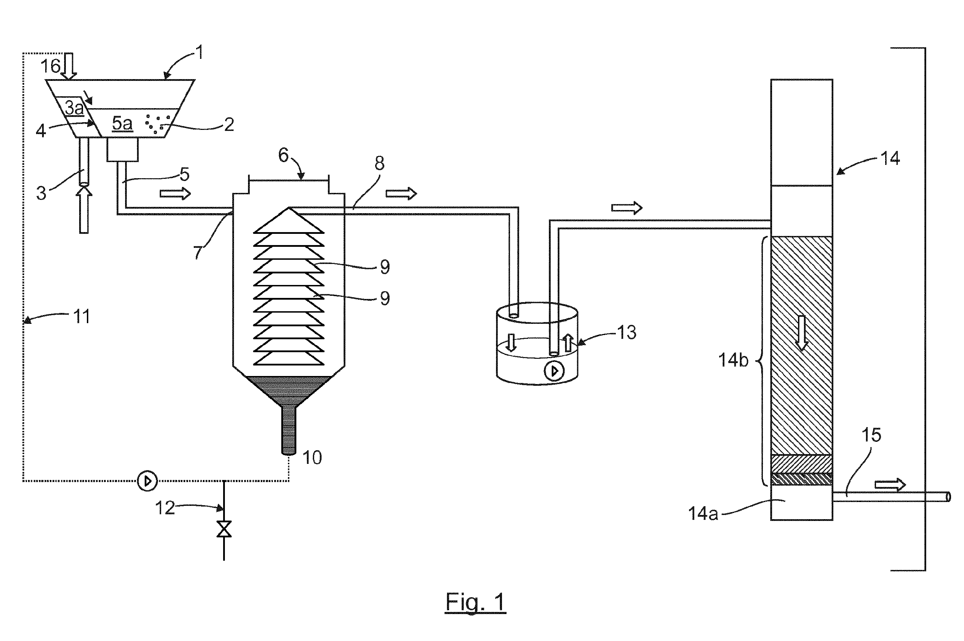

Tel que mentionné précédemment, le principe de l'invention consiste à proposer un procédé de traitement d'eau comprenant une étape de mise en contact d'une eau à traiter avec un matériau granulaire adsorbant spécifique, suivie d'une étape de clarification du mélange d'eau et de matériau adsorbant provenant de la première étape, ce procédé pouvant être mis en oeuvre sans l'ajout de produits chimiques de type coagulant et/ou floculant et permettant ainsi d'éviter la formation de boues de matériau adsorbant et, corollairement, de s'affranchir de toute étape de traitement de ces boues. Un tel procédé peut être mis en oeuvre dans une installation du type de celle représentée à la figure 1.

Cette figure présente un mode de réalisation de l'invention selon lequel l'installation comprend un réacteur 1 essentiellement en forme d'entonnoir contenant du matériau granulaire adsorbant 2, ledit réacteur permettant la mise en contact d'une eau à traiter avec ledit matériau adsorbant. Selon l'invention, le matériau adsorbant est constitué d'agglomérats de particules de charbon actif, lesdits agglomérats présentant une taille moyenne comprise entre 20 µm et 1000 µm, et un indice d'iode supérieur à 1000 mg/g.

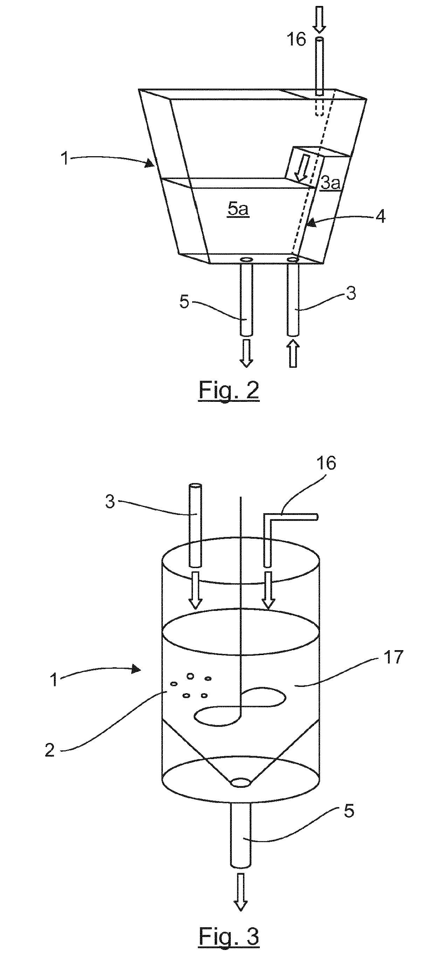

La forme du réacteur 1, représenté également à la figure 2, délimite une chambre qui présente deux compartiments 3a et 5a délimités par une paroi 4. L'un des compartiments 3a comprend, dans sa partie inférieure, des moyens d'amenée 3 de l'eau à traiter, et l'autre compartiment 5a comporte, dans sa partie inférieure, une canalisation d'évacuation 5 du mélange d'eau et de matériau adsorbant.

L'installation comprend par ailleurs un décanteur cylindrique 6 qui présente dans sa partie supérieure une entrée de fluide 7 reliée à la canalisation d'évacuation 5 du réacteur 1 et une sortie d'eau clarifiée 8. Ce décanteur présente une partie inférieure essentiellement conique dotée d'une sortie 10 pour le matériau granulaire décanté. Ce décanteur 6 comprend une pluralité de lamelles coniques 9, organisées par empilement les unes dans les autres en ménageant des chemins de transit de fluide entre les lamelles adjacentes. Une canalisation de recyclage 11 relie la partie inférieure du décanteur 6 au réacteur 1. Cette canalisation de recyclage présente des moyens de purge 12 du matériau granulaire décanté. Une entrée 16 située en haut du réacteur 1 permet la réinjection du matériau granulaire adsorbant recyclé dans celui-ci.

A sa sortie du décanteur 6, l'eau clarifiée est dirigée vers une bâche tampon 13 avant de transiter dans un filtre à particules 14 comprenant dans sa partie inférieure une couche de gravier 14a, et au dessus de celle-ci, une couche de sable 14b de granulométrie décroissante en allant vers le haut du filtre. Ce filtre est équipé de moyens de rétrolavage (non représentés) du matériau filtrant. Enfin, l'installation présente une sortie 15 de l'eau clarifiée et filtrée dans le filtre à particules 14.

Comme décrit ci-dessus, la figure 2 présente un réacteur 1 envisageable dans un mode de réalisation particulier de l'invention.

La figure 3 présente une alternative au réacteur 1 selon un autre mode de réalisation de l'invention. Selon cet alternative, le réacteur 1 est essentiellement cylindrinque avec un fond conique et comprend dans sa partie supérieure l'amenée d'eau 3 et l'entrée 16 pour la réinjection du composé granulaire adsorbant recyclé. La canalisation de sortie 5 est reliée à la partie inférieure du réacteur 1. Des moyens de mélange 17, comprenant des pales montées sur un axe rotatif, sont par ailleurs prévus pour mélanger l'eau à traiter avec le matériau granulaire 2.

En référence à la figure 1, les eaux à traiter sont injectées dans le réacteur 1 au niveau du compartiment 3a de celui-ci par les moyens d'amenée d'eau 3. La mise en contact de cette eau avec le matériau granulaire 2 permet d'adsorber sur celui-ci les composés organiques et les polluants contenus dans l'eau à traiter. Ce matériau adsorbant étant le matériau spécifique cité ci-dessus, il n'est ni nécessaire ni utile d'ajouter des produits chimiques de type coagulant ou floculant dans le réacteur 1 pour créer des flocs favorisant la décantation ultérieure.

Le mélange de matériau adsorbant et d'eau provenant du réacteur 1 est dirigé grâce à la canalisation d'évacuation 5 vers le décanteur 6. Le mélange est injecté dans le décanteur au niveau de l'entrée de fluide 7 de celui-ci, entrée prévue pour distribuer ce fluide tangentiellement dans le décanteur 6. Les lamelles coniques 9, organisées par empilement les unes dans les autres en ménageant des chemins de transit de fluide entre les lamelles adjacentes, permettent d'optimiser la séparation du matériau granulaire chargé de matière organique de l'eau. Le décanteur 6 présente à son extrémité inférieure une forme conique favorisant la récupération du matériau granulaire décanté. L'eau clarifiée est quant à elle évacuée du décanteur 6 par la sortie 8 de celui-ci. La sortie 10 située dans la partie inférieure conique du décanteur 6 permet le recyclage du matériau granulaire adsorbant décanté. Cette sortie 10 est reliée à une canalisation de recyclage 11 équipée de moyens de purge 12. Cette canalisation 11 permet de recycler directement une partie du matériau adsorbant dans le réacteur 1 au niveau de l'entrée 16 de celui-ci. Une autre partie de ce matériau est évacué, de façon continue ou intermittente, par la purge 2. La réinjection du matériau granulaire recyclé au niveau de l'entrée 16 du réacteur 1 peut avantageusement se faire par un écoulement gravitaire.

Afin de pallier l'évacuation d'une partie du matériau granulaire par les moyens de purge 12, et ainsi permettre le maintien d'un niveau de traitement donné, du matériau adsorbant neuf peut être ajouté manuellement dans le réacteur 1. On pourra aussi prévoir, dans d'autres modes de réalisation, des moyens automatisés d'apport de tel matériau granulaire neuf.

A sa sortie du décanteur 6, l'eau clarifiée est dirigée vers le filtre à sable 14 permettant d'affiner sa purification.

L'installation représentée à la figure 1 a été utilisée pour traiter une eau présentant les caractéristiques suivantes :

| | |
|---|---|
| matières en suspension MES (mg/l) | < 4 |
| COD (mg C/l) | 2 à 4 |

Tout au long du test, la quantité de matériau adsorbant dans l'installation a été maintenue à environ 15 kg. Quotidiennement, une partie de ce matériau adsorbant a été extrait grâce à la purge 12 pour être remplacé par du matériau neuf.

En pratique, 20 grammes de matériau adsorbant par litre d'eau traitée ont été renouvelé quotidiennement.

Le réacteur 1 a été alimenté en eau à traitée à un débit de 1,5 m³/h correspondant à un temps de contact entre cet eau et le matériau adsorbant de 4 minutes.

Le vitesse de décantation apparente dans le décanteur 6 a été fixée entre 10 m/h et 20 m/h

Le débit de recirculation du matériau granulaire du décanteur 6 vers le réacteur 1 a été fixé à 0,2 m³/h.

L'eau traitée obtenue présente les caractéristiques suivantes :

| | |
|---|---|
| MES (mg/l) | < 4 |
| COD (mg C/l) | 1 à 1,8 |

## Revendications

1. Procédé de traitement d'eau en vue d'en abattre la teneur en matières organiques et en polluants, ledit procédé comprenant :
une première étape de mise en contact d'une eau à traiter avec un matériau adsorbant granulaire mise en oeuvre de façon à observer un temps de contact de ladite eau avec ledit matériau adsorbant compris entre 5 et 20 mn ;
suivie d'une deuxième étape de clarification du mélange d'eau et de matériau adsorbant granulaire provenant de ladite première étape conduisant d'une part à l'obtention d'une eau clarifiée et d'autre part à celle de matériau adsorbant granulaire usité ;
une recirculation continue ou intermittente dudit matériau adsorbant granulaire usité vers ladite première étape ;
une purge continue ou intermittente d'une partie du matériau adsorbant granulaire usité et un apport continu ou intermittent de matériau adsorbant granulaire neuf en quantité suffisante pour compenser ladite partie de matériau granulaire purgé ;
et ledit matériau adsorbant granulaire étant constitué d'agglomérats de particules de charbon actif, lesdits agglomérats présentant une taille moyenne comprise entre 20 µm et 1000 µm, et un indice d'iode supérieur à 1000 mg/g.

2. Procédé selon la revendication 1 **caractérisé en ce que** ledit procédé est mis en oeuvre en l'absence de tout ajout de produit chimique,

3. Procédé selon la revendication 1 ou 2 **caractérisé en ce que** ledit matériau adsorbant granulaire est constitué d'agglomérats de particules de charbon actif, lesdits agglomérats présentant une taille moyenne comprise entre 200 µm et 700 µm, et un indice d'iode supérieur à 1000 mg/g.

4. Procédé selon l'une des revendications 1 ou 2 **caractérisé en ce que** ladite purge continue ou intermittente d'une partie du matériau adsorbant usité et l'apport continu ou intermittent de matériau granulaire neuf sont mis en oeuvre de façon à maintenir une concentration dudit matériau adsorbant lors de ladite première étape comprise entre 2 mg/l et 50 mg/l.

5. Procédé selon l'une des revendications précédentes **caractérisé en ce qu'**il comprend une étape supplémentaire d'affinage, comprise dans le groupe constitué par une désinfection et une filtration sur membranes ou sur lit de particules, de ladite eau clarifiée provenant de ladite deuxième étape.

6. Procédé selon l'une des revendications précédentes **caractérisé en ce qu'**il comprend l'égouttage du matériau adsorbant usité purgé puis la régénération directe par voie thermique dudit matériau ainsi égoutté.

7. Procédé selon l'une des revendications précédentes **caractérisé en ce que** ladite seconde étape est effectuée à une vitesse de décantation apparente comprise entre 10 m/h et 20 m/h.

8. Installation pour la mise en oeuvre du procédé selon l'une quelconque des revendications 1 à 7 **caractérisée en ce qu'**elle comprend :
un réacteur (1) contenant un matériau granulaire adsorbant (2) constitué d'agglomérats de particules de charbon actif, lesdits agglomérats présentant une taille moyenne comprise entre 20 µm et 1000 µm, et un indice d'iode supérieur à 1000 mg/g, ledit réacteur (1) étant pourvu de moyens d'amenée d'eau (3) et d'une canalisation d'évacuation (5) d'un mélange d'eau et de matériau granulaire adsorbant;
un décanteur (6) présentant dans sa partie supérieure une entrée (7) de fluide reliée à ladite canalisation d'évacuation (5) dudit réacteur (1) et une sortie (8) d'eau clarifiée et présentant une partie inférieure essentiellement conique dotée d'une sortie (10) de matériau granulaire décanté;
une canalisation de recyclage (11) reliant ladite partie inférieure du décanteur (6) audit réacteur (1);
des moyens de purge (12) d'une partie du matériau granulaire décanté.

9. Installation selon la revendication 8 **caractérisée en ce que** ledit décanteur (6) est pourvue d'une pluralité de lamelles (9).

10. Installation selon la revendication 9 **caractérisée en ce que** lesdites lamelles (9) sont coniques et organisées par empilement les unes dans les autres en ménageant des chemins de transit de fluide entre lamelles adjacentes.

11. Installation selon la revendication 10 **caractérisée en ce que** le décanteur (6) présente un corps essentiellement cylindrique, ladite entrée (7) de fluide étant prévue pour distribuer celui-ci tangentiellement dans ledit corps.

12. Installation selon l'une quelconque des revendications 8 à 11 **caractérisée en ce que** ledit réacteur (1) présente un corps essentiellement cylindrique et est pourvue de moyens d'agitation (17).

13. Installation selon l'une quelconque des revendications 8 à 10 **caractérisé en ce que** ledit réacteur (1) présente un corps essentiellement en forme d'entonnoir délimitant une chambre présentant deux compartiments (3a,5a) délimités par une paroi (4), l'un (3a) pourvu dans sa partie inférieure desdits moyens (3) d'amenée d'eau et l'autre (4a) pourvu dans sa partie inférieure de ladite canalisation (5) d'évacuation du mélange d'eau et de matériau granulaire adsorbant et reliée dans sa partie supérieure à ladite canalisation de recyclage (11).
